Europäisches Patentamt

European Patent Office

Office européen des brevets

(11) Numéro de publication: **0 298 843**
**A1**

## (12) DEMANDE DE BREVET EUROPEEN

(21) Numéro de dépôt: **88401703.9**

(22) Date de dépôt: **01.07.88**

(51) Int. Cl.4: **C 22 B 59/00**
C 01 F 17/00
// C22B3/00

(30) Priorité: **10.07.87 FR 8709796**

(43) Date de publication de la demande:
**11.01.89 Bulletin 89/02**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex (FR)**

(72) Inventeur: **Levêque, Alain**
**18, rue du Général Guillaumat**
**F-17000 La Rochelle (FR)**

(74) Mandataire: **Dutruc-Rosset, Marie-Claude et al**
**RHONE-POULENC INTERSERVICES Service Brevets**
**Chimie 25, Quai Paul Doumer**
**F-92408 Courbevoie Cédex (FR)**

(54) Procédé de séparation des terres rares par extraction liquide-liquide mettant en oeuvre des diluants halogènes ou du type acides carboxyliques.

(57) L'invention concerne un procédé de séparation des terres rares par extraction liquide-liquide.

Selon ce procédé on utilise comme agent d'extraction une phase organique comprenant un acide organophosphonique ou phosphinique et un diluant halogène ou choisi dans le groupe des acides carboxyliques.

EP 0 298 843 A1

**Description**

# PROCEDE DE SEPARATION DES TERRES RARES PAR EXTRACTION LIQUIDE-LIQUIDE METTANT EN OEUVRE DES DILUANTS HALOGENES OU DU TYPE ACIDES CARBOXYLIQUES

La présente invention concerne un procédé de séparation des terres rares par extraction liquide-liquide.

On sait que la séparation des terres rares par extraction liquide-liquide peut être réalisée de façon très efficace par les acides organophosphoniques ou organophosphiniques.

Cette séparation se fait par mise en contact d'une solution aqueuse contenant les terres rares avec une phase organique comprenant comme extractant un acide organophosphonique ou organophosphinique. Ce type d'acide est très sélectif et on obtient ainsi d'excellentes séparations en mettant en oeuvre un nombre relativement faible d'étages théoriques d'extraction à contre-courant.

Toutefois, un problème peut se poser pour la réextraction à partir de la phase organique des terres rares extraites. Cette réextraction se fait avec des solutions d'acides tels que l'acide chlorhydrique, l'acide nitrique par exemple. Or, les acides organophosphoniques ou organophosphiniques sont des agents d'extraction présentant une acidité moyennement forte. De plus dans les procédés industriels ils sont utilisés dilués dans les hydrocarbures paraffiniques de type kérosène. Dans ces conditions, la réextraction nécessite des consommations d'autant plus importantes d'acides fortS concentrés que le rendement de récupération souhaité des terres rares est élevé.

Ceci implique des coûts en réactifs importants qui peuvent rendre moins intéressants les procédés d'extraction liquide-liquide d'un point de vue économique.

L'objet de l'invention est donc de trouver une composition de solvant et notamment un diluant pouvant faciliter la réextraction.

Dans ce but, le procédé de séparation des terres rares par extraction liquide-liquide selon l'invention est du type comportant une mise en contact d'une solution aqueuse initiale chargée en au moins une terre rare avec une phase organique initiale comprenant un exctractant choisi dans le groupe des acides organophosphoniques ou organophosphiniques et au moins un diluant ; une séparation d'une phase aqueuse et d'une phase organique ; une réextraction de la ou des terres rares de la phase organique par mise en contact avec une solution aqueuse acide ; et il est caractérise en ce qu'on utilise au moins un diluant halogéné ou choisi dans le groupe des acides carboxyliques.

L'emploi des diluants de l'invention abaisse d'une manière très nette la consommation en acide pour la réextraction ou permet, à conditions égales, d'augmenter le rendement de récupération des terres rares.

D'autres caractéristiques et avantages de l'invention seront mieux compris à la lecture de la description et des exemples concrets mais non limitatifs qui vont suivre.

La phase organique initiale selon l'invention comporte tout d'abord un agent extractant qui peut être choisi dans le groupe des acides organophosphoniques c'est-à-dire les composés de formule $(R_1O) R_2 PO(OH)$ dans laquelle $R_1$ et $R_2$ peuvent être identiques ou différents et sont des radicaux alkyles, alicycliques, alcényles, alcynyles, alcoxy-alkyles linéaires ou ramifiés, aryles, alkylaryles, arylalkyles.

On peut citer plus particulièrement ceux pour lesquels $R_1$ et $R_2$ sont des radicaux alkyles et notamment l'acide éthyl-2 hexyl éthyl-2 hexyl phosphonique.

Selon l'invention, l'agent extractant peut aussi être choisi dans le groupe des acides organophosphiniques, c'est-à-dire les composés de formule $R_3 R_4 PO (OH)$ dans laquelle $R_3$ et $R_4$ peuvent être identiques ou différents et ont la même signification que les radicaux $R_1$ et $R_2$ définis ci-dessus.

On peut citer plus particulièrement ceux pour lesquels $R_3$ et $R_4$ sont des radicaux alkyles et notamment les acides bis(éthyl-2 hexyl) phosphinique ou bis(triméthyl-2,4,4 phényl) phosphinique.

Selon la caractéristique principale de l'invention la phase organique comprend au moins un diluant qui peut être choisi dans le groupe des acides carboxyliques ou dans celui des diluants halogénés.

En ce qui concerne les acides caboxyliques on peut tout d'abord utiliser les acides linéaires ou ramifiés, en particulier les acides gras, à nombre d'atomes de carbone d'au moins 5, notamment compris entre 6 et 15.

On peut citer comme exemple l'acide éthyl-2 hexanoïque, l'acide laurique, l'acide versatic 10 vendu par la Société SHELL qui est un mélange d'isomères de l'acide décanoïque.

On peut aussi choisir le diluant dans la classe des acides naphténiques.

L'autre classe de diluants selon l'invention est celle des diluants halogénés et plus particulièrement celle des hydrocarbures halogénés.

On peut mentionner notamment les hydrocarbures aliphatiques, alicycliques, éthyleniques et benzéniques halogénés.

D'autre part, selon un mode particulier de réalisation de l'invention, on utilise les diluants fluorés.

A titre d'exemple on pourra citer le tétrachlorure de carbone, le chlorobenzène, le dichlorotoluène, le chloroxylène, le dichloroéthylène, le trichloroéthylène, la tétrachloroéthylène, la trichloropropane.

Pour les composés fluorés on peut mentionner les composés vendus sous la marque FLUGENE notamment le trichlorotrifluoroéthane, le difluorotétrachloroéthane (FLUGENE 112).

On pourra aussi utiliser le dibromodifluoroéthane, les dérivés fluorés du cumène, du diéthylbenzène, du p-éthyltoluène.

Bien entendu les diluants qui ont été décrits ci-dessus peuvent être utilisés seuls ou en mélange. D'autre part la proportion dans la phase organique de diluants selon l'invention représente généralement entre environ 30 et 95 % en volume de cette phase. Par ailleurs, dans certains cas pour améliorer l'hydrodynamique du système il peut être intéressant d'ajouter un hydrocarbure du type habituellement utilisé. On peut envisager une teneur en hydrocarbure allant jusqu'à 30 % de la phase organique sans perturber l'action des diluants selon l'invention.

La solution aqueuse initiale peut être de toute nature. Elle comprend une ou plusieurs terres rares généralement sous forme de chlorure ou nitrate.

Tout ce qui concerne la mise en contact des phases ne fait pas partie de l'invention. On rappellera que cette mise en contact peut se faire dans un appareillage du type mélangeur-décanteur ou colonne, de préférence en continu et à contre-courant sur plusieurs étages.

La température pour cette opération n'est pas critique et elle est généralement située entre l'ambiante et 80°C environ.

La réextraction se fait elle aussi d'une manière en soi connue dans des appareils du même type que ceux mentionnés ci-dessus.

On utilise pour réextraire les terres rares une solution aqueuse acide qui grâce au procédé de l'invention peut être nettement moins concentrée.

Des exemples vont maintenant être donnés.

## EXEMPLE 1 COMPARATIF

On met en contact une solution aqueuse de chlorure de néodyme de concentration 93,2 g d'oxyde par litre avec une phase organique constituée d'acide éthyl-2 hexyl éthyl-2 hexyl phosphonique en solution à raison de 1 mole par litre dans le kérosène, le rapport de volumes de phases étant égal à l'unité.

L'extraction est réalisée à température ambiante.

On obtient une phase organique contenant 5,54 g/l d'oxyde de néodyme.

On réalise un nouveau contact de la phase organique avec une solution d'acide chlorhydrique à 0,1 mole par litre, le rapport des volumes de phases étant égal à l'unité et l'on obtient une phase aqueuse contenant 2,09 g/l d'oxyde de néodyme soit un rendement de récupération à partir de la phase organique de 37,7 % seulement.

## EXEMPLE 2

La solution aqueuse de néodyme de l'exemple 1 est mise en contact dans le mêmes conditions que l'exemple précédent avec une phase organique constituée d'acide éthyl-2 hexyl éthyl-2 hexyl phosphonique en solution à 1 M/l dans un diluant constitué de kérosène (20 % en volume de phase organique) et d'acide éthyl-2 hexanoïque (50 % en volume de phase organique).

On obtient une phase organique après contact contenant 3,69 g/l d'oxyde de néodyme.

On réalise à nouveau un contact de la phase organique avec une solution d'acide chlorhydrique à 0,1 mole par litre, le rapport des volumes de phases étant égal à l'unité et l'on obtient une phase aqueuse contenant 3,07 g/l d'oxyde de néodyme soit un rendement de récupération de 83,5 %.

## EXEMPLE 3

La solution aqueuse de néodyme de l'exemple 1 est mise en contact avec une phase organique constituée d'acide éthyl-2-hexyl éthyl-2 hexylphosphonique en solution à 1 mole par litre dans le tétrachloroéthylène.

On obtient dans les mêmes conditions que l'exemple 1 une phase organique contenant 4,03 g/l d'oxyde de néodyme.

On réalise à nouveau un contact de la phase organique avec une solution d'acide chlorhydrique à 0,1 mole par litre dans les conditions de l'exemple 1 et l'on obtient une phase aqueuse contenant 3,1 g/l d'oxyde de néodyme soit un rendement de récupération de 77 %.

## EXEMPLE 4 COMPARATIF

Une solution aqueuse de nitrate de gadolinium à 90 g d'oxyde par litre est mise en contact dans un rapport de volumes de phases de 1 à la température ambiante avec la phase organique de l'exemple 1.

On obtient une phase organique contenant 16,1 g/l d'oxyde de gadolinium.

On réalise un nouveau contact, dans un rapport de volumes de phases égal à 1 avec une solution d'acide nitrique à 0,5 mole/litre et l'on obtient une phase aqueuse contenant 6,2 g/l d'oxyde de gadolinium soit un rendement de récupération de 38 %.

## EXEMPLE 5

La solution aqueuse de nitrate de gadolinium de l'exemple 4 est mise en contact avec la phase organique de l'exemple 2. On obtient une phase organique contenant 8,5 g/l d'oxyde de gadolinium.

Cette phase organique est ensuite mise en contact avec une solution d'acide nitrique 0,5 N. On obtient une solution aqueuse contenant 8,13 g/l d'oxyde de gadolinium soit un rendement de 95,5%.

Bien entendu, l'invention n'est nullement limitée aux modes de réalisation décrits qui n'ont été donnés qu'a titres d'exemples. En particulier, elle comprend tous les moyens constituant des équivalents techniques des moyens décrits ainsi que leurs combinaisons si celles-ci sont mises en oeuvre dans le cadre de la protection comme revendiquée.

## Revendications

1. Procédé de séparation des terres rares par extraction liquide-liquide du type comportant une mise en contact d'une solution aqueuse initiale chargée en au moins une terre rare avec une phase organique initiale comprenant un extractant choisi dans le groupe des acides organophosphoniques ou organophosphiniques et au moins un diluant ; une séparation d'une phase aqueuse et d'une phase organique ; une réextraction de la ou des terres rares de la phase organique par mise en contact avec une solution aqueuse acide ; caractérisé en ce qu'en vue d'améliorer la réextraction, on utilise au moins un diluant halogéné ou choisi dans le groupe des acides carboxyliques.

2. Procédé selon la revendication 1, caractérisé en ce que le diluant est choisi dans le groupe comprenant les acides carboxyliques linéaires ou ramifiés ayant au moins 5 atomes de carbone, notamment entre 6 et 15, et les acides naphténiques.

3. Procédé selon la revendication 1 caractérisé en ce que le diluant est choisi dans le groupe des hydrocarbures halogénés et notamment des hydrocarbures aliphatiques, alicycliques, éthyléniques, benzéniques halogénés.

4. Procédé selon la revendication 1 ou 3 caractérisé en ce que le diluant est un diluant fluoré et notamment un hydrocarbure fluoré.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| P,X | EP-A-0 233 121 (RHONE-POULENC CHIMIE) <br> * Revendications; page 1, dernier alinéa; page 2, alinéa 1 * | 1,3,4 | C 22 B 59/00 <br> C 01 F 17/00 // <br> C 22 B 3/00 |
| X | EP-A-0 198 736 (RHONE-POULENC SPECI*LITES CHIMIQUES) <br> * Revendications; page 4, alinéas 4,5; page 5, alinéas 1-3 * | 1,3,4 | |
| X | EP-A-0 156 735 (RHONE-POULENC SPECIALITES CHIMIQUES) <br> * Revendications; pages 3-7 * | 1,3,4 | |
| X | FR-A-2 460 275 (DAIHACHI CHEMICAL INDUSTRY Co., LTD) <br> * Revendications; page 7 * | 1,3,4 | |
| X | US-A-3 554 693 (K.A. ORLANDINI) <br> * Revendications; colonne 2, dernière ligne; colonne 3 * | 1,2 | |
| X | US-A-3 378 352 (R.D. HANSEN) <br> * Revendications; colonne 2, dernier alinéa * | 1,3,4 | DOMAINES TECHNIQUES RECHERCHES (Int. Cl.4) <br><br> C 22 B <br> C 01 F |
| X | US-A-3 230 036 (F.A. KAPPELMANN) <br> * Revendications * | 1,2 | |
| X | US-A 2 859 092 (R.H. BAILES) <br> * Revendications; colonnes 5,6 * | 1,3,4 | |
| A | US-A-4 201 747 (YUKINORI MINAGAWA) <br> * Revendications * | 1,2 | |
| A | FR-A-1 514 428 (THORIUM LTD) <br> * Résumé; pages 1,2 * | 1,2 | |

Le présent rapport a été établi pour toutes les revendications

| Lieu de la recherche | Date d'achèvement de la recherche | Examinateur |
|---|---|---|
| LA HAYE | 22-08-1988 | JACOBS J.J.E.G. |

EPO FORM 1503 03.82 (P0402)